# EUROPEAN PATENT APPLICATION

(11) **EP 2 383 393 A1**
(43) Date of publication of application: **02.11.2011**
(21) Application number: 11163976.1
(22) Date of filing: 27.04.2011
(51) Int. Cl.: E02D 27/42, F03D 11/04

(54) **Apparatus and method for producing a concrete foundation**

(30) Priority: 30.04.2010 US 770832
(71) Applicant: General Electric Company, Schenectady, NY 12345 (US)
(72) Inventor: Voss, Stefan, 48499, Salzbergen (DE); Schwede, Stefan, 48499, Salzbergen (DE); Paura, Ingo, 48499, Salzbergen (DE)
(74) Representative: Bedford, Grant Richard

(57) **Abstract**

A foundation interface 30 for a concrete foundation for the support of a structure comprises a prefabricated concrete element 33 with a plurality of through holes 40, which are geometrically arranged to correspond to an arrangement of holes or bolts 110 of a structure to be supported. Further, a method for fabricating a concrete foundation comprising such a foundation interface is provided.

## Description

The present disclosure relates generally to concrete foundations and, in particular, to concrete foundations for the support of tall, heavy or large structures like towers. More particularly, it relates to a prefabricated foundation element for a foundation. Specifically, it relates to a prefabricated foundation element for the foundation for the support of a wind turbine.

To mount structures on their respective foundations, e.g. towers and the like, which may be used to support power lines, communication systems, street lighting and street signals, bridge supports, commercial signs, freeway signs, ski lifts, wind turbines, and the like, often a plurality of steel bolts are used which protrude from a face of the foundation. The bolts are used to mount a flange of the structure thereon, the flange being provided with through holes, through which the bolts are pushed during mounting of the flange to the structure. These bolts are typically arranged in a circle or rectangle, the geometrical shape of which typically corresponds to the arrangement of through holes in the flange of the structure to be mounted. Once the flange is put in place on the foundation and the bolts are accommodated in the through holes of the flange, the flange is tightened to the foundation by nuts which are screwed on the bolts and fastened.

Typically, the greater part of the entire length of the bolts, which are also called anchor bolts, protrudes through the concrete of the foundation to provide mechanical stability. Thus, the bolts are typically installed in the formwork of the foundation before the concrete foundation is cast. When liquid concrete is filled into the formwork, the greater part of the length of the bolts is buried in the concrete, and only the part which will later serve for mounting protrudes out of the surface of the concrete.

The geometrical arrangement of the bolts should be sufficiently precise to allow an installation of the flange with its through holes. In some cases, even if the geometrical arrangement of the bolts deviates only by some millimeters from the nominal arrangement, the flange might not fit onto the bolts because the bolts cannot be pushed through the through holes in the flange. This is undesirable, as the concrete foundation with the integrated bolts might have to be destroyed and reconstructed in this case.

Thus, it is desirable to employ a method of installation of the bolts in the concrete formwork before casting which allows for a precise arrangement of the bolts. Conventionally, this is achieved by the following measures. Before installation in the formwork, the bolts are mounted with one end, usually the lower end, on a prefabricated ring called anchor ring. The ring is typically formed of steel and the bolts are fixed to the ring, typically by nuts. The ring is named anchor ring because the ring body (or other suitable anchor elements) is the structure which leads the force exerted by the structure from the bolts to the concrete foundation. To this end, the ring is formed with openings or through holes to which the bolts are fixed. The system including the ring structure and the anchor bolts is called anchor bolt system. Before casting the concrete of the foundation, the anchor bolt system is lowered or mounted inside the formwork for the foundation, such that the system is provided in the appropriate height - which means that a defined length of the bolts will protrude from the surface of the foundation after filling in the liquid concrete.

However, in this manner, only one end, typically the lower end of a bolt is fixed to the anchor ring, whereas the other ends protrudes vertically upwards without being hindered of tilting. If, for example, a bolt is not fixed tightly enough to the anchor ring, its upper end may tilt from a vertical direction, which is undesirable for the reasons laid out above. Conventionally, a support structure may be introduced to ensure also precise arrangement of the upper ends of the bolts. This support structure includes an adaptor made from steel, which is provided with holes, and is supported by columns or pillars. The columns are fixed to or stand on the bottom of the formwork. The adaptor is then used to fixate the upper end of the bolts. However, this method is time consuming and the columns are usually buried in the concrete during casting, which means they cannot be reused.

Further, when casting a conventional foundation, the surface of the concrete on which the structure is mounted is typically of a certain roughness. This roughness can cause gaps between the foundation and the mounted structure, which is undesirable.

In light of the above, it is desirable to have an apparatus and method to allow for easier mounting of an anchor bolt system for a concrete foundation. At the same time, a higher precision of the mounting between the foundation and the structure is desirable.

In view of the above, a foundation interface for a concrete foundation for the support of a structure, a wind turbine system, and a method of fabricating a concrete foundation supporting a structure are provided.

Further advantages, features, aspects and details are apparent from the dependent claims, the description and drawings.

According to one embodiment, a foundation interface for a concrete foundation for the support of a structure is provided, which includes a prefabricated concrete element having a plurality of through holes geometrically arranged to correspond to an arrangement of holes or bolts of a structure to be supported.

According to a further embodiment, a wind turbine system is provided, which includes a wind turbine and a foundation including an anchor bolt system including a prefabricated concrete element having a plurality of through holes geometrically arranged to correspond to an arrangement of holes or bolts of a tower of the wind turbine, an anchor element, at least one anchor bolt, wherein the anchor element is mounted to a portion of the at least one anchor bolt, another portion of the at least one anchor bolt protrudes through the foundation interface, and wherein a tower of the wind turbine is mounted on the foundation interface.

According to another embodiment, a method for fabricating a concrete foundation supporting a structure is provided, which includes providing a formwork, providing a foundation interface including a prefabricated concrete element having a plurality of through holes geometrically arranged to correspond to an arrangement of through holes or bolts of a structure to be supported, providing at least one anchor bolt, providing at least one anchor element, mounting a first portion of the at least one anchor bolt to the at least one anchor element, and mounting another portion of the at least one anchor bolt to the foundation interface in order to form an anchor bolt system, wherein the foundation interface is basically flush with the planned level of a face of the concrete foundation, and filling concrete into the formwork.

Embodiments are also directed at apparatuses for carrying out the disclosed methods and including apparatus parts for performing each described method step. These method steps may be performed by way of hardware components, a computer programmed by appropriate software, by any combination of the two or in any other manner. Furthermore, embodiments according to the invention are also directed at methods by which the described apparatus operates. It includes method steps for carrying out every function of the apparatus

Various aspects and embodiments of the present invention will now be described in connection with the accompanying drawings, in which:
Fig. 1 shows a schematic cross-sectional view of a foundation having an anchor bolt system according to an embodiment;
Fig. 2 shows a perspective top view of a foundation interface according to an embodiment;
Fig. 3 shows a perspective side view of the foundation interface of Fig. 2;
Fig. 4 shows a perspective top view of a foundation interface according to a further embodiment;
Fig. 5 shows a perspective top view of a foundation interface according to another embodiment;
Fig. 6 shows a schematic side view illustrating a wind turbine having a foundation with anchor bolts and a foundation interface according to an embodiment;
Fig. 7 to Fig. 10 show a number of illustrative examples of a method to produce a foundation having a foundation interface according to an embodiment.

Reference will now be made in detail to various embodiments of the invention, one or more examples of which are illustrated in the figures. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

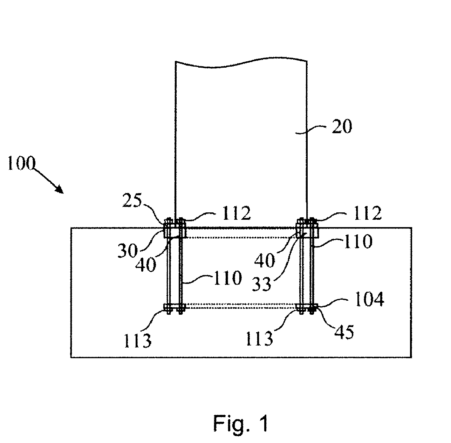

Fig. 1 shows a sectional view of an embodiment of a concrete foundation 100 for the support of a structure 20, including a foundation interface 30. The foundation interface includes a prefabricated concrete element 33. It has a plurality of through holes 40, which are geometrically arranged to correspond to an arrangement of holes or through holes 25 of the structure 20 to be supported. Cast into concrete foundation 100 is also an anchor element 104, which may also include a plurality of elements, with a plurality of through holes 45. Inside the foundation 100, the anchor element is fastened to anchor bolts 110, typically via nuts 113, and portions of the bolts protrude from the surface of the foundation 100 in order to allow the mounting of the structure 20, typically via nuts 112. Substantially flush with the surface of foundation 100, foundation interface 30 is provided. Portions of the anchor bolts 110 protrude through the through holes 40 of the foundation interface. The structure 20 is mounted on the foundation 100, more specifically on the foundation interface 30. In an embodiment, the structure may be a wind turbine for on-shore use.

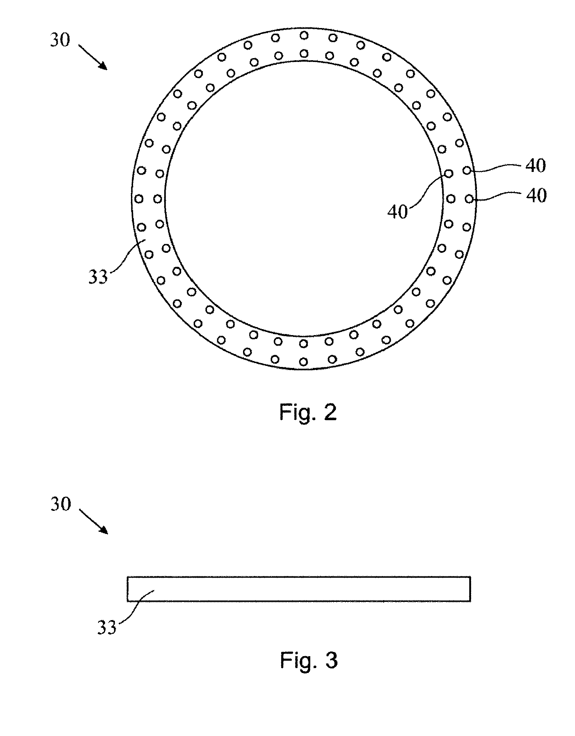

Fig. 2 shows a perspective top view of a concrete foundation interface 30 according to an embodiment. In this non-limiting example, the foundation interface (henceforth also called element) is formed as a ring and includes two concentric circles of through holes 40. As the element should withstand high forces, typically it is made of steel reinforced concrete, fiber reinforced concrete, high-performance concrete or ultra-high-performance concrete. Also combinations thereof are suitable. The element is typically prefabricated, which means that it is cast in a workshop and not on the construction site for the foundation. However, also the production of the element at the construction site is possible and is regarded to fall under the scope of the present application. Prefabricated in this case indicates that the element is cast before casting of the foundation body itself, such that the element may be produced with a higher accuracy than would be achievable during the casting process of the foundation. The element may also be aftertreated or cured by grinding, e.g. with a CNC mill, to improve the precision of the geometrical properties and thus to improve the accuracy of fit when mounting the structure. Fig. 3 shows a perspective side view of the embodiment shown in Fig. 2.

The foundation interface typically has a shape which substantially resembles the shape of a flange of the structure to be supported. Typical shapes are selected from the group consisting of a rectangular plate, a circular plate, a ring, a rectangular plate with a recess, and an oval plate. Figs 2 and 3 show, as a non-limiting example, an embodiment with the shape of a ring. The foundation interface is provided with a plurality of through holes. The diameter of the holes is typically uniform amongst the holes and resembles the diameter of the anchor bolts with which the structure to be supported is fastened to the foundation. A typical diameter of the holes is from 20 mm to 300 mm, more typically from 40 mm to 200 mm, its value, together with the number of holes, is strongly dependent on the weight and height of the structure to be supported, and what forces are exerted on the structure, e.g. wind forces in case of a wind turbine. Methods to calculate the necessary strength and diameter of the bolts, as well as any other calculations necessary for the dimensioning of parameters of methods and apparatuses described herein, are well known to a skilled person.

In the exemplary embodiment shown in Fig. 2 and Fig. 3, the concrete foundation interface has the shape of a ring with, exemplarily, a rectangular cross section. The cross section may also have a variety of other shapes, e.g. a half circle, a polygon, a combination thereof, or the like, provided that one face is substantially plane in order to facilitate mounting of the structure to be supported. The inner diameter of the ring depends mainly on the dimensions of the structure to be supported, as the through holes 40 in the ring serve as an accommodation for bolts with which the supported structure is fixated to the foundation. In a non-limiting embodiment used for foundations for wind turbines, the inner diameter of the ring is from 2 m to 10 m, more typically from 3 m to 8 m. The width of the ring, meaning the distance between the inner side face and the outer side face in a radial direction, is typically from 20 cm to 100 cm, more typically from 30 cm to 60 cm. The number of through holes may vary from 4 to 300, more typically from 10 to 200, depending on the dimensions and type of the supported structure. The through holes 40 are typically, but not necessarily, evenly distributed in a circumferential direction. In an embodiment, the holes are provided in two concentric circles, which allows e.g. for the fixation of the structure on its inner side and outer side, as is shown schematically in Fig. 1.

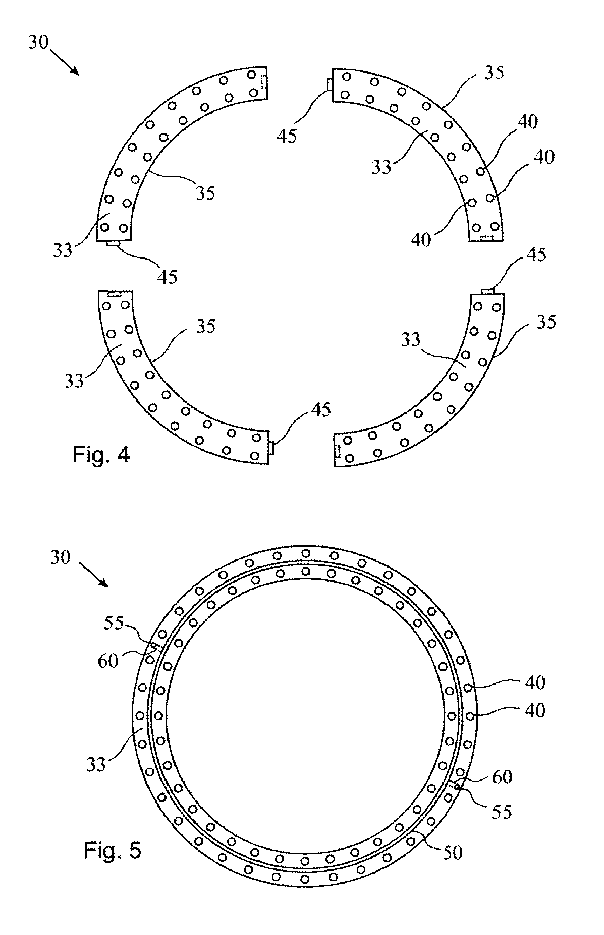

Fig. 4 shows an embodiment of the foundation interface 30, which includes a number of prefabricated segments 35. In the depicted example, the interface includes four ring segments 35. They each include at least one connection element 45. Fixed together, they form the foundation interface. The connection elements 45 may comprise concrete or, typically, steel. Suitable ways of designing and implementing the connection elements are well known to a skilled person, they are only shown schematically. The connection of the segments 35 to each other may for example be provided by bolts or by a tongue-and-groove type connection. A plurality of segments may be transported more easily in comparison to a one-piece-structure as shown in Fig. 2.

Fig. 5 shows an embodiment of the foundation interface including at least one groove 50 on the surface on which the supported structure is to be mounted. This groove is connected by one or more channels or ducts 60 in the foundation interface (dotted lines) to openings 55 in a face of the interface. The openings may be provided in the face facing the structure to be mounted, or a side face of the foundation interface. In the latter case it should be ensured that the openings are still accessible after casting of the foundation. The groove may have a depth from 0.5 cm to 20 cm, more typically from 1 cm to 8 cm, and a width from 0,5 to 20 cm, more typically from 1 cm to 8 cm. The ducts or channels 60 may have a diameter from 1.0 cm to 20 cm, more typically from 1.5 cm to 8 cm. The dimensioning of the groove, the ducts and the opening mainly depends on the size of the structure to be supported. In a non-limiting exemplary embodiment used for a foundation for a wind turbine, the groove, ducts and openings are typically all from 1.0 cm to 3.0 cm wide. After the foundation is cast and the structure has been mounted thereon, there may remain small gaps between the structure, which is typically made from steel, and the foundation interface. This may be due to small irregularities in the fabrication of the foundation interface and/or the flange of the structure to be mounted. The ripple of the foundation interface, measured over a distance of 1 m, may typically be about 1 mm to 4 mm. Thus, there may remain a small gap between the interface and the steel structure of up to a few mm. This is undesirable for reasons of optimum load bearing capacity, corrosion protection, tightness against rain water, and the like. Consequently, the groove may be filled with a suitable substance after the structure is mounted. Non-limiting examples are grout, a concrete suspension, or a synthetic material, e.g. a resin or a thermoplastic. The substance is injected via openings 55 and ducts 60 into groove 50 and evenly distributes under the injection pressure over the entire length of the groove. Once the groove is filled up, the filler protrudes over the edge of the groove and starts to fill the gap to the structure. After the filler has set, the gap is hermetically sealed, improving e.g. load bearing capacity, corrosion resistance and water tightness of the structure-foundation combination.

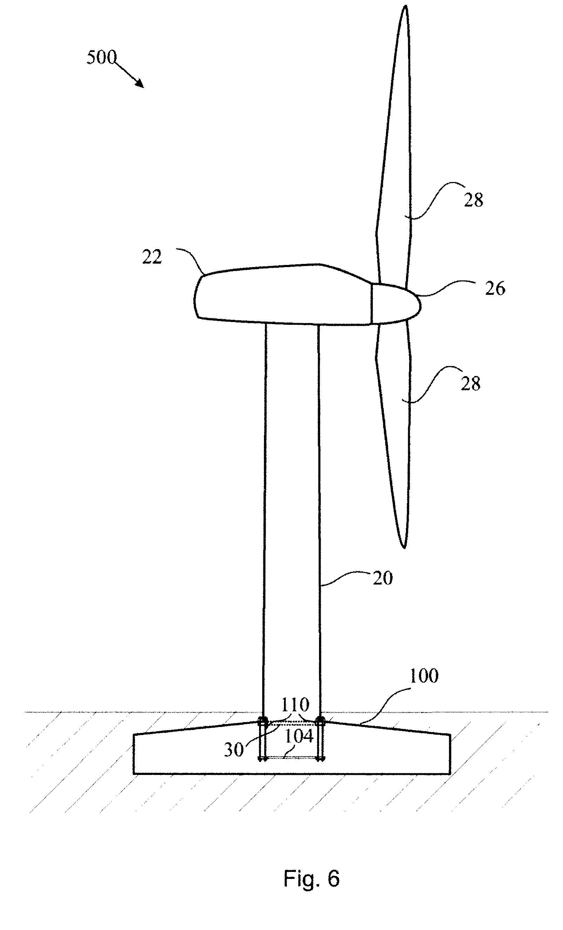

The embodiments shown in Figs. 1, 2, 3, 4 and 5 may for example be used in a foundation of a wind turbine 500, which is schematically depicted in Fig. 6. The wind turbine includes a tower 20, a nacelle 22, a hub 26, two or more rotor blades 28, and a foundation 100. The tower is mounted to the concrete foundation 100, which includes bolts 110, an anchor element 104, and a foundation interface 30, which are all cast in the concrete foundation. Instead of a wind turbine, in other embodiments the foundation may be used for any other structure which typically requires a concrete foundation, e.g. ski lifts, towers for broadcasting purposes, traffic signs, and the like.

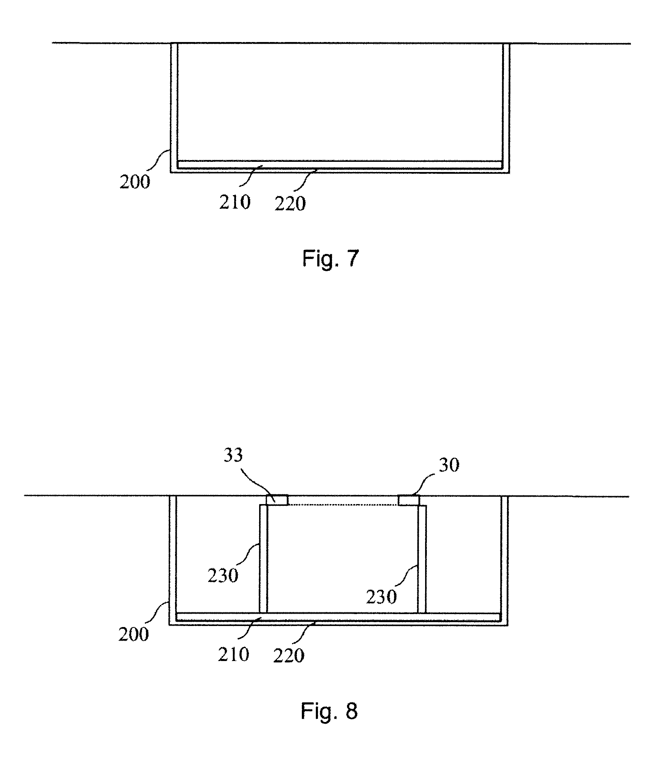

A method of mounting a foundation including a foundation interface according to an embodiment is described in the following with respect to Fig. 7 to Fig. 10. This is only a non-limiting example and is not intended to be necessarily executed in the described order of the different work blocks. Depending on the individual setup, modifications of the described procedure or apparatuses may be suitable, which includes also performing work blocks in a different order. Those modifications are also regarded to fall into the scope of the present application.

Fig. 7 shows a building pit 200, which is excavated at the site where the structure shall be erected. The pit is typically round or has a square shape, and a flat bottom, the dimensions depend on the size and type of the structure. The pit is then equipped with a formwork 220. On the bottom of the formwork, a layer of blinding concrete with a thickness from 2 cm to 20 cm is cast, more typically from 3 cm to 12 cm. In some embodiments, the formwork may e.g. also be erected on the ground without excavating a pit.

Fig. 8 shows the preparation for the erection of the anchor bolt system of the foundation. A support structure 230, which typically includes steel or concrete, is put into the formwork 220 and rests on the layer of blinding concrete 210. The support structure may be chosen amongst a variety of variations. E.g., welded steel columns and/or T-bars may be used, or concrete elements, or individually fabricated structures, or combinations thereof. The only requirement is, that the structure must be able to stably stand on the blinding layer without support, and that it can bear the weight of the anchor bolt system and the foundation interface. Implementing such a support structure is within the standard knowledge of a skilled person. On the support structure 230, foundation interface 30 is placed.

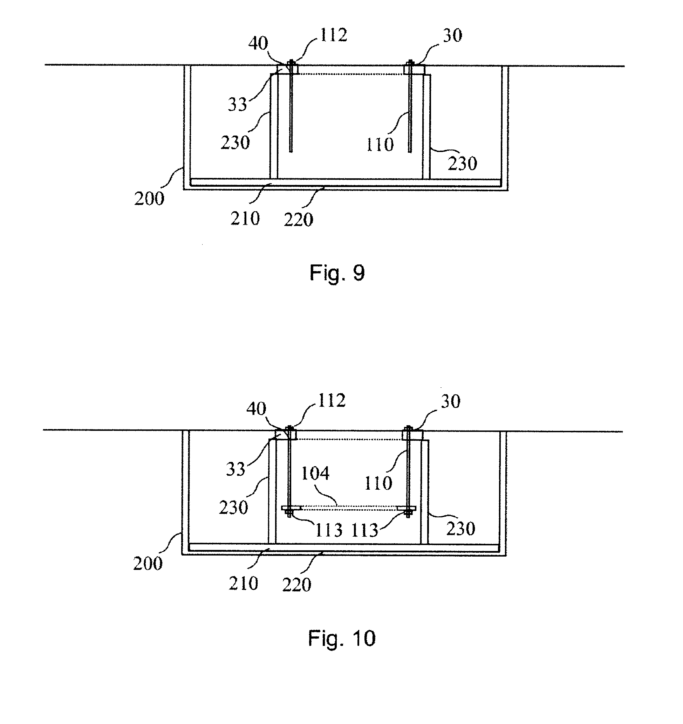

Fig. 9 shows that anchor bolts 110 are placed in the through holes 40 of the foundation interface 30. The bolts are tightened with nuts 112, so that they are fixed in the appropriate position, protruding with a portion out of the foundation interface 30. Nuts 112 are later removed before mounting the structure.

Fig. 10 shows anchor element 104 mounted to the bolts 110 and its fixation with nuts 113. In the exemplary embodiment, an anchor ring 104 is used. Subsequently, concrete is filled into the pit up to a level such that the upper face of the foundation interface is substantially flush with the surrounding concrete. The concrete is left to set. The bolts 112 are removed, and the foundation is ready to be used to mount a structure to the parts of the bolts 110 protruding from the surface of foundation interface 30.

The system of anchor bolts 110, foundation interface 30, anchor elements or anchor ring 104, and nuts 112, 113 may in another embodiment also be mounted outside pit 200 and then be placed in the formwork onto support 230.

This written description uses examples to disclose the invention, including the preferred mode, and also to enable any person skilled in the art to make and use the invention. While the invention has been described in terms of various specific embodiments, those skilled in the art will recognize that the invention can be practiced with modification within the spirit and scope of the claims. Especially, mutually non-exclusive features of the embodiments described above may be combined with each other. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A foundation interface for a concrete foundation for the support of a structure, comprising:
   a prefabricated concrete element having a plurality of through holes geometrically arranged to correspond to an arrangement of holes or bolts of a structure to be supported.
2. The foundation interface according to clause 1, wherein a material of the concrete element is chosen from the group consisting of: steel reinforced concrete, fiber reinforced concrete, high-performance concrete, ultra-high-performance concrete, or any combination thereof.
3. The foundation interface according to any preceding clause, wherein the concrete element has a shape selected from the group consisting of: a rectangular plate, a circular plate, a ring, a rectangular plate with a recess, and an oval plate.
4. The foundation interface according to any preceding clause, wherein the concrete element comprises a plurality of segments adapted to be joined together to form the element.
5. The foundation interface according to any preceding clause, wherein each of the segments comprises at least one connection element.
6. The foundation interface according to any preceding clause, wherein at least one connection element comprises steel.
7. The foundation interface according to any preceding clause, wherein a groove is provided in a face of the foundation interface, wherein the groove has substantially the geometrical shape of a structure to be supported.
8. The foundation interface according to any preceding clause, wherein the groove is connected by at least one channel or duct to an opening in a face of the foundation interface.
9. A wind turbine system, comprising:
   a wind turbine, and
   a foundation, including
   an anchor bolt system, comprising:
      a foundation interface comprising a prefabricated concrete element having a plurality of through holes geometrically arranged to correspond to an arrangement of holes or bolts of a tower of the wind turbine,
      an anchor element,
      at least one anchor bolt,
      wherein the at least one anchor element is mounted to a portion of the at least one anchor bolt, another portion of the at least one anchor bolt protrudes through the foundation interface, and wherein a tower of the wind turbine is mounted on the foundation interface.
10. The wind turbine system according to any preceding clause, wherein a material of the concrete element is chosen from the group consisting of: steel reinforced concrete, fiber reinforced concrete, high-performance concrete, ultra-high-performance concrete, or any combination thereof.
11. The wind turbine system according to any preceding clause, wherein the concrete element has a shape selected from the group consisting of: a rectangular plate, a circular plate, a ring, a rectangular plate with a recess, and an oval plate.
12. The wind turbine system according to any preceding clause, wherein the concrete element comprises a plurality of segments adapted to be joined together to form the element.
13. The wind turbine system according to any preceding clause, wherein each of the segments comprises at least one connection element.
14. The wind turbine system according to any preceding clause, wherein the at least one connection element comprises steel.
15. The wind turbine system according to any preceding clause, wherein a circumferential groove is provided on a face of the foundation interface, wherein the groove has substantially the geometrical shape of the tower of the wind turbine.
16. The wind turbine system according to any preceding clause, wherein the groove is connected by at least one channel or duct to an opening in a face of the foundation interface.
17. A method for fabricating a concrete foundation supporting a structure, comprising:
   a) providing a formwork;
   b) providing a foundation interface, comprising
      a prefabricated concrete element having a plurality of through holes geometrically arranged to correspond to an arrangement of through holes or bolts of a structure to be supported; and
   c) providing at least one anchor bolt;
   d) providing at least one anchor element;
   e) mounting a first portion of the at least one anchor bolt to the at least one anchor element;
   f) mounting another portion of the at least one anchor bolt to the foundation interface in order to form an anchor bolt system, wherein the foundation interface is basically flush with the planned level of a face of the concrete foundation; and,
   g) filling concrete into the formwork.
18. The method of any preceding clause, wherein the anchor bolt system is premounted outside the formwork.
19. The method of any preceding clause, wherein the foundation interface has the shape of a ring provided with through holes, and the anchor element has the shape of a ring provided with through holes, and wherein the structure to be mounted is a wind turbine.

## Claims

1. A foundation interface (30) for a concrete foundation for the support of a structure, comprising:
a prefabricated concrete element (33) having a plurality of through holes (40) geometrically arranged to correspond to an arrangement of holes or bolts (110) of a structure to be supported.

2. The foundation interface (30) according to claim 1, wherein a material of the concrete element (33) is chosen from the group consisting of: steel reinforced concrete, fiber reinforced concrete, high-performance concrete, ultra-high-performance concrete, or any combination thereof.

3. The foundation interface (30) according to claim 1 or claim 2, wherein the concrete element (33) has a shape selected from the group consisting of: a rectangular plate, a circular plate, a ring, a rectangular plate with a recess, and an oval plate.

4. The foundation interface (30) according to any preceding claim, wherein the concrete element (33) comprises a plurality of segments adapted to be joined together to form the element, and wherein each of the segments comprises at least one connection element.

5. The foundation interface (30) according to claim 4, wherein the at least one connection element (33) comprises steel.

6. The foundation interface (30) according to any preceding claim, wherein a groove (50) is provided in a face of the foundation interface, and wherein the groove has substantially the geometrical shape of a structure to be supported.

7. The foundation interface (30) according to claim 6, wherein the groove (50) is connected by at least one channel or duct to an opening in a face of the foundation interface.

8. A wind turbine system (500), comprising:
a wind turbine, and
a foundation (30), including
an anchor bolt system, comprising
a prefabricated foundation interface (30) according to claims 1 to 7, and
at least one anchor element, and
at least one anchor bolt,
wherein the at least one anchor element is mounted to a portion of the at least one anchor bolt, another portion of the at least one anchor bolt protrudes through the foundation interface, and wherein a tower of the wind turbine is mounted on the foundation interface.

9. A method for fabricating a concrete foundation supporting a structure, comprising:
providing a formwork
providing a foundation interface, comprising
a prefabricated foundation interface having a plurality of through holes (40) geometrically arranged to correspond to an arrangement of holes or bolts (110) of a structure to be supported,
providing at least one anchor bolt,
providing at least one anchor element,
mounting a first portion of the at least one anchor bolt to the at least one anchor element,
placing the foundation interface (30) so that it is substantially flush with the planned level of a face of the concrete foundation, and pushing another portion of the at least one anchor bolt through a through hole of the foundation interface, and
filling concrete into the formwork.

10. The method of claim 9, wherein the foundation interface (30) has the shape of a ring provided with through holes (40), and the at least one anchor element has the shape of a ring provided with through holes, and wherein the structure to be mounted is a wind turbine.
